# EUROPEAN PATENT APPLICATION

(11) **EP 2 447 447 A1**
(43) Date of publication of application: **02.05.2012**
(21) Application number: 11186801.4
(22) Date of filing: 26.10.2011
(51) Int. Cl.: E04H 4/00, A61H 33/00, A61H 33/02, B29C 51/00

(54) **Portable whirlpool spa and method of manufacture thereof**

(30) Priority: 26.10.2010 IT BO20100642
(71) Applicant: TEUCO GUZZINI S.p.A., Montelupone (IT)
(72) Inventor: Guzzini, Mauro, 62019 Recanati (IT)
(74) Representative: Jorio, Paolo

(57) **Abstract**

A portable whirlpool spa comprising a cup-shaped body (2), which delimits a tub (3) that can be filled with a fluid and accommodate one or more persons; the portable whirlpool spa (1) comprising a bodywork (4) which supports the cup-shaped body (2); the bodywork (4) being load-bearing and having, in turn, the shape of a cup-shaped body; the bodywork (4) having a monocoque (11) and a coating (12) which is applied to at least one wall (7a; 7b; 8) of the monocoque (11).

## Description

The present invention relates to a portable whirlpool spa and a method for the manufacture of said portable whirlpool spa.

In particular, the present invention relates to a portable whirlpool spa of the type comprising a closed cycle hydraulic system that always re-circulates the same amount of fluid; in other words, the portable whirlpool spa described above does not exchange fluid with the water mains system.

A portable whirlpool spa of the type described above is relatively compact and can also be installed in tight spaces, preferably for domestic use. A portable whirlpool spa known in the prior art comprises a cup-shaped body which delimits a tub that can be filled with a specific amount of fluid and is able to accommodate at least one person, a supporting frame of said cup-shaped body and a hydraulic system that regulates circulation of the fluid inside the tub.

This type of portable whirlpool spa is kept full of fluid for long periods during which it is good practice to close the tub at the top with a cover made of insulating material in order to reduce dispersion of heat. Furthermore, as the motors and the pumps generally used to circulate the fluid are noisy, it is preferable to soundproof the structure of the portable whirlpool spa as far as possible in order to enhance user comfort.

A portable whirlpool spa of the type described above also has the drawback that neither the frame nor the bodywork are able to shield the tub acoustically or thermally to any appreciable extent. In other words, portable whirlpool spas of the type described above involve the use of a great deal of energy to maintain the temperature of the water at comfortable values. Moreover, portable whirlpool spas of the type described above are relatively noisy.

The aim of the present invention is to provide a portable whirlpool spa and a method for the manufacture of said portable whirlpool spa that overcome the drawbacks described above.

According to the present invention, there is provided a portable whirlpool spa as set forth in Claim 1 and, preferably, in any of the subsequent Claims depending directly or indirectly on Claim 1.

According to the present invention, there is also provided a method, as set forth in Claim 8 and, preferably, in any of the subsequent Claims depending directly or indirectly on Claim 8.

The invention will now be described with reference to the accompanying drawings, illustrating a non-limitative embodiment thereof, in which:
- figure 1 is a perspective view of a preferred embodiment of the portable whirlpool spa according to the present invention; and
- figure 2 is an exploded view of the portable whirlpool spa according to figure 1.

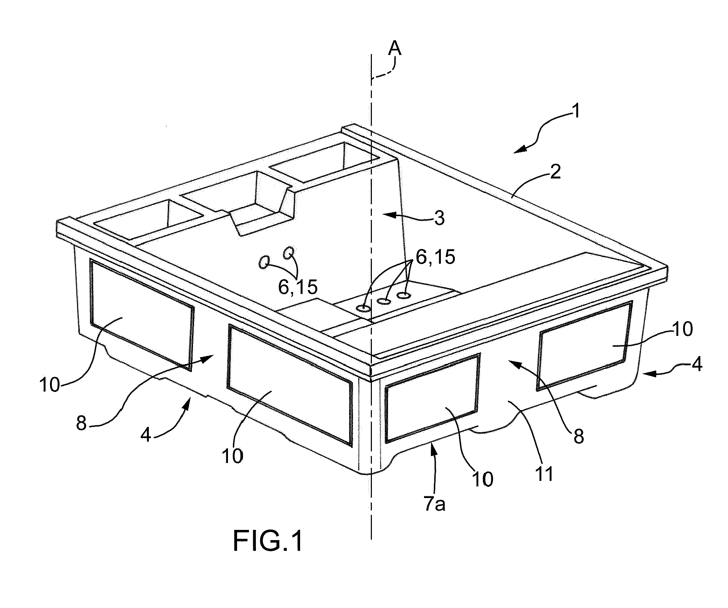

In figure 1, number 1 indicates, in its entirety, a portable whirlpool spa comprising a cup-shaped body 2, which delimits internally a tub 3, that can be filled with a fluid, for example water, and accommodate one or more persons.

The portable spa 1 also comprises a bodywork 4, which is load-bearing and supports the cup-shaped body 2. The term load-bearing refers to a structure able to support, on its own, a specific load; in the case concerned, the fact that the bodywork 4 is load-bearing and supports the cup-shaped body 2 implies that the bodywork 4 is able, on its own, to support the load of the cup-shaped body 2 when this is in conditions of use at maximum load, i.e. with the tub filled with water and with the maximum number of persons inside the tub 3.

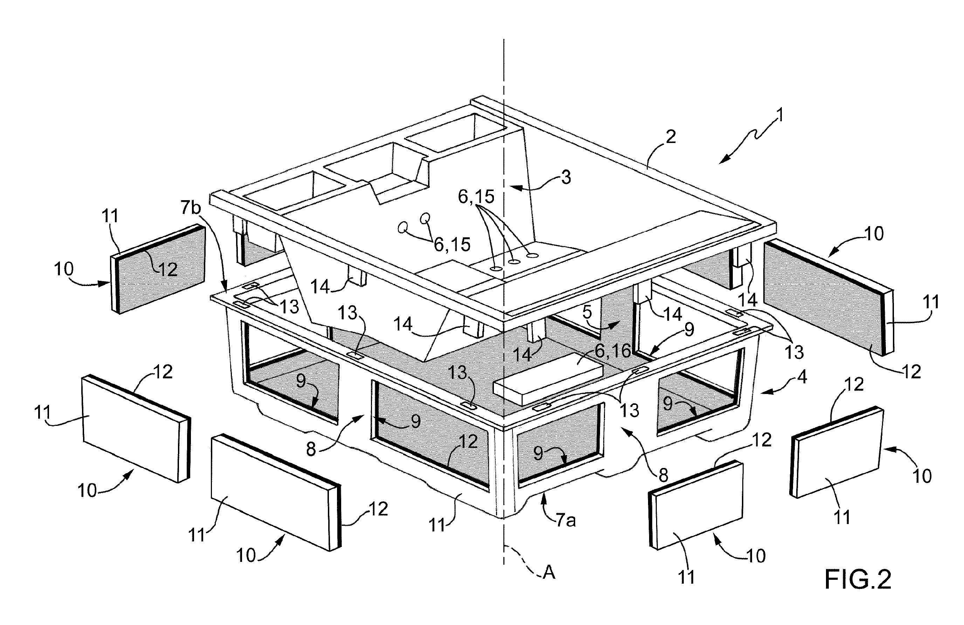

As illustrated in figure 2, the bodywork 4 has, in turn, the shape of a cup-shaped body which internally delimits a recess 5. The cup-shaped body 2 is inserted at least partially inside the recess 5 of the bodywork 4.

The portable whirlpool spa 1 also comprises a hydraulic system 6 that regulates circulation of the fluid inside the tub 3, as explained in more detail below.

As shown in figure 2, the bodywork 4 has an axis A substantially perpendicular to a supporting plane (not shown) and comprising: a supporting wall 7a and an upper wall 7b, substantially perpendicular to the axis A; and a plurality of side walls 8 parallel to the axis A. The bodywork 4 has a plurality of openings 9 obtained in the side walls 8 of the bodywork 4. Each opening 9 is configured in such a way that the recess 5 communicates with the area outside the portable spa 1. The bodywork 4 also comprises a plurality of panels 10, each arranged in such a way as to close a respective opening 9.

As shown in figure 2, the bodywork 4 comprises a monocoque 11 and a coating 12. Preferably, the monocoque 11 is a single-piece thermoformed shell-type construction. The monocoque 11 forms the supporting wall 7a, the upper wall 7b and the side walls 8 of the bodywork 4 (in such a way as to delimit a cup-shaped body).

The coating 12 consists of a layer of material applied to at least one portion of the monocoque 11 and intended to reinforce the monocoque 11. As shown in figures 1 and 2, the coating 12 is applied internally to all the walls of the monocoque 11 which delimit the recess 5; in other words, the coating 12 is applied to the supporting wall 7a, to the upper wall 7b, to the side walls 8 including the panels 10.

According to an alternative embodiment, not shown, the coating 12 is only applied to some portions of the bodywork 4.

The coating 12 consists of a layer of glass-reinforced plastic to reinforce the structure of the bodywork 4 or of a layer of polyurethane.

The coating 12 is made of heat and/or sound insulating materials. The coating 12 is made of polyurethane; in particular, the coating 12 is made of polyurethane foam. The polyurethane coating 12 preferably has a thickness (quantity that protrudes from a determined portion of the bodywork 4) of between 5 and 20 mm. In particular, the coating 12 consists of a layer of polyurethane with a thickness of between 10 and 15 mm.

Alternatively, the coating 12 is made of mineral wood and/or of roofing polystyrene. Preferably, the coating 12 is made of: polyurethane foam with a density of 35 [kg/m³] and a heat conductivity coefficient of around 0.024 [W/mK]; and/or of mineral wood with a density of between 40 and 220 [kg/m³] and a heat conductivity coefficient of between 0.035 and 0.042 [W/mK]; and/or of roofing polystyrene with a density of 30 [kg/m³] and heat conductivity coefficient of around 0.035 [W/mK].

The coating 12 is suitable to thermally insulate the tub 3 so as to considerably reduce dispersion of heat by the cup-shaped body 2 towards the outside through the monocoque 11 of the bodywork 4. The coating 12 is suitable to soundproof the tub 3 in such a way as to considerably reduce dispersion of sound waves towards the outside.

As shown in figure 2, each panel 10 is made of the same material as the bodywork 4. In particular, each panel 10 is obtained from the bodywork 4 during the cutting of a respective opening 9. Each panel 10 consists of an intact portion of material removed from the bodywork 4 during the manufacture of the respective opening 9.

As shown in figure 2, the bodywork 4 has a plurality of reference housings 13 arranged along the perimeter of the upper wall 7b; the cup-shaped body 2 comprises a plurality of blocks 14, that protrude below from the cup-shaped body 2 and are arranged along the perimeter of the cup-shaped body 2 so that each block 14 engages with a respective housing 13 of the bodywork 4.

The hydraulic system 6 comprises, in turn, hydraulic means 15 of a known type and illustrated schematically (such as taps and jets of water) and means of activation 16 (such as pumps and/or motors) for activation of said hydraulic means 15. Preferably, the hydraulic means 15 and the means of activation 16 comprise whirlpool means (of a known type and illustrated schematically).

Preferably, the hydraulic means 15 are applied to the cup-shaped body 2 and face towards the inside of the tub 3; while the means of activation 16 are arranged inside the recess 5 of the bodywork 4 between the bodywork 4 and the cup-shaped body 2. The hydraulic means 15 and the means of activation 16 are connected together in a known way that is not illustrated.

According to an alternative embodiment, not shown, the portable whirlpool spa 1 comprises an internal structure obtained by means of thermoforming and having the shape of a cup-shaped body, and an external coating that comprises one or more layers of reinforcement and/or thermal insulation material applied to the internal structure.

A method for the manufacture of the portable spa 1 is now described.

The method comprises, first of all, the step of manufacturing, by means of thermoforming, at least part of a load-bearing bodywork 4 having the shape of a cup-shaped body.

The step of manufacturing the bodywork 4 comprises the sub-step of manufacturing, by means of thermoforming, a monocoque 11, in the shape of a cup-shaped body and delimiting a recess 5. In particular, the monocoque 11 of the thermoformed bodywork 4 defines the supporting wall 7a, the upper wall 7b, and the side walls 8 of the bodywork 4. The monocoque 11 is constructed in such a way that the side walls 8 are integral; in other words, the side walls 8 are constructed without openings 9.

The step of manufacturing the bodywork 4 also comprises the sub-step of applying the coating 11 to the monocoque 11 after thermoforming. In particular, the walls 7 and 8 of the monocoque 11 are coated internally, i.e. on the side facing towards the recess 5, with a layer of coating material 12. For example, the internal coating 12 is obtained through application of at least one layer of reinforcement material such as glass-reinforced plastic. Alternatively or additionally, a coating 12 of insulating material is applied. Preferably, for construction of the coating 12, a layer of polyurethane is applied; in particular, a layer of polyurethane foam is applied. For instance, on at least one wall 7 or 8, a layer of polyurethane coating 12 is applied with a thickness (quantity that protrudes from a determined portion of the bodywork 4) of between 5 and 20 mm. Preferably, the coating 12 consists of a layer of polyurethane with a thickness of between 10 and 15 mm.

Subsequently, the method comprises the step of cutting into the bodywork 4 so as to obtain one or more openings 9 and one or more panels 10; each panel 10 being defined by the intact material removed from the bodywork 4 during the manufacture of the respective opening 9. In particular, one or more openings 9 are made in one or more side walls 8 of the bodywork 4. Each opening 9 is made by removing a portion 10 of a respective side wall 8 in order to permit an operator to access the inside of the recess 5 of the bodywork 4. According to a preferred embodiment, each opening 9 is made so as to maintain the respective portion 10 substantially intact, so that it can be used as the closing panel of the opening 9 after suitable adaptations of a known type that are not illustrated.

The method comprises the further step of installing the hydraulic means 15 on the cup-shaped body 2 and of installing the means of activation 16 inside the bodywork 4. Subsequently, the hydraulic means 15 and the means of activation 16 are connected together in a known way. During the step of installing the hydraulic means 15 and the means of activation 16, the panels 10 are removed and an operator is able to access the inside of the recess 5 also through the side openings 9.

Subsequently, the cup-shaped body 2 is fitted over the bodywork 4 so that the hydraulic means 15 are arranged inside the recess 5, each block 14 of the cup-shaped body is inserted correctly inside the respective housing 13 and the cup-shaped body 2 rests on the upper wall 7b of the bodywork 4. The cup-shaped body 2 is arranged over the bodywork 4 so as to close the recess 5.

Lastly, each opening 9 is closed with its respective panel 10. Note that the access to the recess 5 through the openings 9 can also be used to carry out maintenance operations on the portable spa 1 even once said portable spa 1 has been installed.

According to the above description, the bodywork 4 is manufactured as a load-bearing structure made of a single thermoformed part; in this way, the times and costs involved in manufacturing the load-bearing structure and the weights involved are reduced compared to conventional bodywork. Moreover, the layer of coating 12 structurally reinforces the bodywork 4 and increases the thermal and acoustic insulation of the bodywork 4. In particular, the coating 12 considerably reduces the transfer of heat towards the outside and the noise level of the portable spa 1 all to the advantage of user comfort during use of the portable spa 1, since this is made of insulating material such as polyurethane and/o mineral wood and/or roofing polystyrene. Substantially, the portable spa of the type described above achieves a lower heat transfer coefficient towards the outside than the portable spas known in the prior art; therefore, energy is saved as less energy is needed to heat the portable spa.

Moreover, the materials used to manufacture the bodywork 4 and the cup-shaped body 2 are light and easily recycled.

## Claims

1. A portable whirlpool spa comprising a cup-shaped body (2) which delimits a tub (3) that can be filled with a fluid and accommodate one or more persons; the portable whirlpool spa (1) comprising a bodywork (4) which supports the cup-shaped body (2); the bodywork (4) being load-bearing and having the shape of a cup-shaped body; the portable spa (1) being **characterised in that** the bodywork (4) comprises a monocoque (11) having a plurality of walls (7a; 7b; 8) and a coating (12), which is applied to at least one wall (7a; 7b; 8) of the monocoque (11).

2. The portable whirlpool spa, as claimed in Claim 1, wherein the coating (12) comprises insulating material; in particular, the coating (12) comprises polyurethane.

3. The portable whirlpool spa, as claimed in Claim 1 or 2, wherein the coating (12) comprises polyurethane foam and/or mineral wood and/or roofing polystyrene.

4. The portable whirlpool spa, as claimed in one of the previous Claims, wherein the bodywork (4) has been at least martially manufactured by means of thermoforming.

5. The portable whirlpool spa, as claimed in one of the Claims from 1 to 4, wherein the bodywork (4) comprises a recess (5) and one or more openings (9) obtained in at least one wall (7a; 7b; 8); each opening (9) putting said recess (5) in communication with the outside.

6. The portable whirlpool spa, as claimed in Claim 5, comprising a panel (10) for each opening (9) of the external bodywork (4); wherein each panel (10) is made of the same material as the bodywork (4).

7. The portable whirlpool spa, as claimed in Claims 1 to 6 and comprising whirlpool means (15; 16).

8. A method for the manufacture of a portable whirlpool spa (1) comprising the step of manufacturing at least one part of a load-bearing bodywork (4) having the shape of a cup-shaped body, wherein the step of manufacturing the bodywork (4) comprises the following sub-steps:
the manufacture, by means of thermoforming, of a monocoque (11), having the shape of a cup-shaped body; the monocoque (11) having a plurality of walls (7a; 7b; 8) that delimit an internal recess (5); and
application of a coating (12) to at least one wall (7a; 7b; 8) of the monocoque (11).

9. The method as claimed in Claim 8, wherein the sub-step of applying a coating (12) comprises the step of applying at least one layer of insulating material; in particular, the sub-step of applying a coating (12) comprises the step of applying at least one layer of polyurethane.

10. The method as claimed in Claim 8 or 9 comprising the step of cutting into the bodywork (4) so as to obtain one or more openings (9) and one or more panels (10); each panel (10) being defined by the intact material removed from the bodywork (4) during the manufacture of the respective opening (9).
